# EUROPEAN PATENT APPLICATION

(11) **EP 3 971 072 A1**
(43) Date of publication of application: **23.03.2022**
(21) Application number: 21382813.0
(22) Date of filing: 10.09.2021
(51) Int. Cl.: B62K 19/14, B62K 19/16, B62J 43/13, B62J 43/28, B62J 6/05, B32B 21/00

(54) **ELECTRIC SCOOTER WITH FLEXIBLE BOARD**

(30) Priority: 21.09.2020 ES 202032044 U
(71) Applicant: Novatek Engineering, S.L., 08191 Rubi (ES); Wang, Yongsheng, 08191 Rubi (ES)
(72) Inventor: WANG, Yongsheng, 08191 Rubi (ES); CARULLA CALLÍS, Andreu, 17820 Banyoles (ES)
(74) Representative: Isern Patentes y Marcas S.L.

(57) **Abstract**

The present invention relates to a scooter with a shock absorbing board, comprising a lower base (1) enabled for a user to rest and be supported. Said lower base (1) is made up of a plurality of sheets (2) with flexible properties, said sheets (2) being superimposed one on top of the other and joined together.

## Description

### Object of the invention

The object of the present invention application is to register a scooter with a shock absorbing board, which incorporates notable innovations and advantages over the techniques used up until now.

More specifically, the invention proposes the development of a scooter with a shock absorbing board, which, due to the particular arrangement thereof, enables it to provide the user with better shock absorbing performance against the roughness exhibited by the surface of the streets or traffic and transit lanes.

### Background of the invention

A multitude of different scooters are known in the current state of the art, widely used, for example, in the commutes and transits of users on public roads.

Despite their good performance, such scooters are remarkably improvable with regard to the damping properties thereof with respect to the roughness exhibited by the transited terrain, which can impair the comfort of the user.

This is the result of the rigid nature of the user's support base in known scooters, also sometimes conditioned by the positioning of a battery on the same support base.

The present invention contributes to solving the present problem, since it enables the user to be provided with better shock absorbing performance against the roughness exhibited by the surface of the streets or traffic and transit lanes.

### Description of the invention

The present invention has been developed in order to provide a scooter with a shock absorbing board, comprising a lower base enabled for a user to rest and be supported, the lower base being made up of a plurality of sheets with flexible properties, and said sheets being superimposed one on top of the other and joined together.

In one embodiment, in the scooter with a shock absorbing board, the sheets are joined together by means of glue or the like.

Additionally, in the scooter with a shock absorbing board, the sheets are also mutually adhered.

In one embodiment, the sheets are adhered by means of glue or the like.

Preferably, the sheets of the scooter with a shock absorbing board are made of wood.

Alternatively, the sheets of the scooter with a shock absorbing board are made of plastic.

Alternatively, the sheets of the scooter with a shock absorbing board are made of rubber.

In another alternative embodiment, the sheets of the scooter with a shock absorbing board are made of steel.

Alternatively, the sheets of the scooter with a shock absorbing board are made of an aluminium alloy.

Alternatively, the sheets of the scooter with a shock absorbing board are made of carbon fibre.

Alternatively, the sheets of the scooter with a shock absorbing board are made of fibreglass.

In another alternative embodiment, the sheets of the scooter with a shock absorbing board are made of bamboo.

Alternatively, the sheets of the scooter with a shock absorbing board are made of a combination of any of the aforementioned materials.

Additionally, the scooter with a shock absorbing board also comprises a handlebar and an electric propulsion means, said handlebar incorporating a power supply battery for said electric propulsion means. Preferably, the handlebar comprises a column that enables the steering area of the handlebar to be joined with the lower base of the scooter, said column being able to incorporate said power supply battery.

In another possible embodiment, in the scooter with a shock absorbing board, the handlebar can incorporate position lights and/or turn signal lights and/or brake lights. Due to this, signalling possibilities during the positioning and transit of the scooter with a shock absorbing board of the invention are improved.

Due to the present invention, the user is provided with better shock absorbing performance against the roughness exhibited by the surface of the streets or traffic and transit lanes.

Other features and advantages of the scooter with a shock absorbing board will become apparent from the description of a preferred but not exclusive embodiment illustrated by way of non-limiting example in the attached drawings, in which:

### Brief description of the drawings

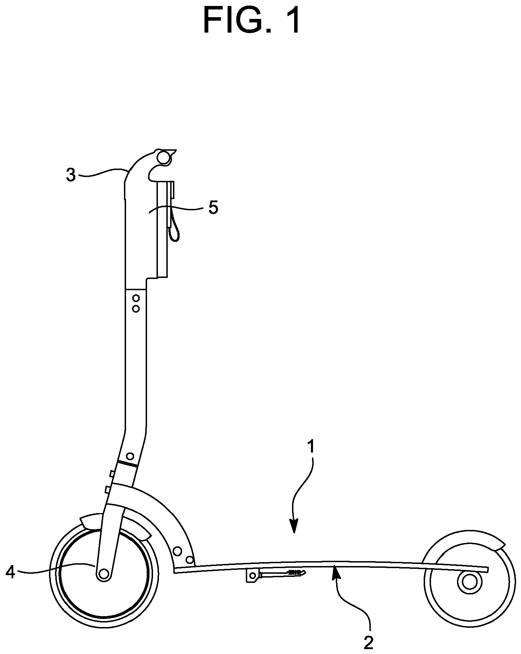

Figure 1 is a schematic view of a preferred embodiment of the scooter with a shock absorbing board of the present invention.

### Description of a preferred embodiment

As shown schematically in Figure 1, the scooter with a shock absorbing board of the proposed invention comprises a lower base 1 enabled for a user to rest and be supported, for a use that is common and already known in the state of the art.

Already according to the invention itself, said lower base 1 is made up of a plurality of sheets 2, with the added feature that said sheets 2 are superimposed one on top of the other and joined together, for example by means of glue or the like, or other suitable means.

The sheets 2 can also be mutually adhered to each other, for example by means of a glue or the like.

Therefore, the lower base 1 is the result of a "composite" of two or more sheets 2 or layers superimposed one on top of the other, applying glues between the aforementioned sheets 2 so that the sheets 2 therefore act together as one single part.

During the use of the scooter with a shock absorbing board of the invention, it is on said lower base 1 that the user must position himself on top and preferably standing up.

Due to the make-up of the lower base 1 by means of the plurality of wooden sheets 2, said lower base 1 exhibits suitable flexibility features to act as a shock absorber, unlike in the current state of the art, in which they are rigid structures.

The aforementioned flexible and shock-absorbing performance of the lower base 1 of the scooter with a shock absorbing board of the proposed invention, contribute to significantly reduce the incidence of impacts and roughness from the surface of the streets or traffic and transit lanes, significantly improving the comfort of the user.

The resulting arrangement of the scooter with a shock absorbing board of the proposed invention is similar to a "skate" board known in the state of the art, with suitable flexibility and resistance.

The materials used for manufacturing the lower base 1 can be wood, plastic, rubber, steel, aluminium alloy, carbon fibre, fibreglass, bamboo, etc., or even a suitable combination thereof.

Additionally, in this preferred embodiment, the scooter with a shock absorbing board of the proposed invention also comprises a handlebar 3 and an electric propulsion means 4, for the autonomous movement thereof.

Said handlebar 3 carries a power supply battery 5, which is in turn enabled to electrically power said electric propulsion means 4. In a preferred embodiment, the battery 5 can be found, for example, in the column of the handlebar 3, as represented in Figure 1.

This contributes to keeping the lower base 1 of the scooter with a shock absorbing board of the invention with free space in order to facilitate the positioning of the user.

The details, shapes, dimensions and other secondary elements, as well as the materials used in manufacturing the scooter with a shock absorbing board of the invention, may be suitably replaced with others that are technically equivalent and do not depart from the essential nature of the invention or from the scope defined by the claims included below.

## Claims

1. A scooter with a shock absorbing board, comprising a lower base (1) enabled for a user to rest and be supported, **characterised in that** the lower base (1) is made up of a plurality of sheets (2) with flexible properties, and said sheets (2) being superimposed one on top of the other and joined together.

2. The scooter with a shock absorbing board according to claim 1, wherein the sheets (2) are joined together by means of glue or the like.

3. The scooter with a shock absorbing board according to claim 1, wherein the sheets (2) are further mutually adhered.

4. The scooter with a shock absorbing board according to claim 3, wherein the sheets (2) are adhered by means of glue or the like.

5. The scooter with a shock absorbing board according to any of claims 1 to 4, wherein the sheets (2) are made of wood.

6. The scooter with a shock absorbing board according to any of claims 1 to 4, wherein the sheets (2) are made of plastic.

7. The scooter with a shock absorbing board according to any of claims 1 to 4, wherein the sheets (2) are made of rubber.

8. The scooter with a shock absorbing board according to any of claims 1 to 4, wherein the sheets (2) are made of steel.

9. The scooter with a shock absorbing board according to any of claims 1 to 4, wherein the sheets (2) are made of an aluminium alloy.

10. The scooter with a shock absorbing board according to any of claims 1 to 4, wherein the sheets (2) are made of carbon fibre.

11. The scooter with a shock absorbing board according to any of claims 1 to 4, wherein the sheets (2) are made of fibreglass.

12. The scooter with a shock absorbing board according to any of claims 1 to 4, wherein the sheets (2) are made of bamboo.

13. The scooter with a shock absorbing board according to any of claims 1 to 4, wherein the sheets (2) are made of a combination of any of the materials mentioned in claims 5 to 12.

14. The scooter with a shock absorbing board according to any of the preceding claims, further comprising a handlebar (3) and an electric propulsion means (4), said handlebar incorporating a battery (5) for supplying said electric propulsion means (4).

15. The scooter with a shock absorbing board according to claim 14, wherein the handlebar (3) incorporates position lights and/or turn signal lights and/or brake lights.
